# EUROPÄISCHE PATENTSCHRIFT

(11) **EP 2 260 229 B1**
(45) Veröffentlichungstag und Bekanntmachung des Hinweises auf die Patenterteilung: **09.11.2011**
(21) Anmeldenummer: 09729625.5
(22) Anmeldetag: 18.03.2009
(51) Int. Cl.: F16M 13/00, F16M 11/24

(54) **HÖHENVERSTELLBARER GERÄTESTÄNDER**
HEIGHT-ADJUSTABLE EQUIPMENT STAND
SUPPORT POUR INSTRUMENTS, RÉGLABLE EN HAUTEUR

(30) Priorität: 08.04.2008 DE 202008004809 U
(43) Veröffentlichungstag der Anmeldung: 15.12.2010
(73) Patentinhaber: Janssen, Rainer, 33106 Paderborn (DE)
(72) Erfinder: Janssen, Rainer, 33106 Paderborn (DE)
(74) Vertreter: Hanewinkel, Lorenz
(86) Internationale Anmeldenummer: PCT/DE2009/000374
(87) Internationale Veröffentlichungsnummer: WO 2009/124523

(56) Entgegenhaltungen:
- WO-A-2006/135242
- WO-A1-88/07343
- FR-A- 806 152
- JP-A- 10 099 171
- US-A- 70 339
- US-A- 4 651 589
- US-A- 5 078 056
- US-A- 5 315 935
- US-A1- 2008 054 149

## Beschreibung

Die Erfindung beschreibt einen höhenverstellbaren Geräteständer, insbesondere für ein Notebook oder für einen Monitor mit Tastatur, der auf einen Tisch gestellt werden kann und der abgesenkt so flach ist, dass eine auf dem Ständer stehende Tastatur problemlos zu bedienen ist, und dessen Tragefläche schnell angehoben werden kann und in jeder Höhe die darauf befindlichen Geräte in einer waagrechten oder definiert schrägen Lage hält.

Bei längerem Arbeiten mit PCs und anderen Geräten oder beim Lesen ist es wünschenswert und gesundheitsfördernd, die Körperhaltung von Zeit zu Zeit zu verändern, z.B. durch abwechselndes Arbeiten im Sitzen und im Stehen. Bekannte höhenverstellbare Einrichtungen hierzu werden im Wesentlichen in folgenden Varianten hergestellt:
- In der ersten Variante lässt sich eine ganze Schreibtischplatte in der Höhe verstellen. Diese Konstruktion ist in der Regel sehr aufwändig und ersetzt einen bereits vorhandenen Schreibtisch.
- Weitere bekannte Varianten mit meist schwenkbaren Tragarmen können an einer vorhandenen Schreibtischplatte in der Regel an der hinteren oder seitlichen Schreibtischkante durch eine Klemmvorrichtung befestigt werden. Diese Varianten haben die Nachteile, dass sie den Schreibtischplatz hinter Monitor und Tastatur verstellen, dass sie auch in abgesenkter Position optisch stören und dass sie es durch den nötigen langen stabilen tragenden Arm normalerweise nicht ermöglichen, die Tastatur bis auf wenige Millimeter auf das Schreibtischniveau abzusenken, so dass die gewohnte Arm- und Handhaltung nicht beibehalten werden kann. Außerdem ist es bei diesen Varianten schwierig, für den Benutzer eine ausreichende Stabilität beim Arbeiten an einer Tastatur oder Maus zu erreichen.
- Andere Varianten, die nachträglich auf vorhandene Schreibtische aufsetzbar sind, haben einen oder mehrere der aufgeführten Nachteile oder können nur aufwändig für unterschiedliche Höhen ummontiert werden.

Für die Realisierung von höhenveränderlichen Einrichtungen sind viele Konstruktionsprinzipien bekannt. Die bekannten Scherenarmkonstruktionen haben den Nachteil, dass sie mit zunehmender Höhenvariation immer unstabiler werden, dass die Enden ihrer Scherenarme häufig geräuschvoll in einer Führungsschiene gleiten und bei Verkanten leicht klemmen und dass sie in der Regel nicht sehr flach sind.

Im deutschen Gebrauchsmuster DE 8631449.1 ist eine Lösung für eine Hebebühne angegeben, bei der die Tragefläche durch zwei parallel auf der Grundfläche angeordnete Kniehebelpaare dadurch waagrecht gehalten wird, dass deren mittlere gelenkige Verbindungen durch zwei Seilzüge gleichzeitig und gleichmäßig nach innen gezogen werden. Diese Konstruktion setzt jedoch voraus, dass die beiden Stützen im abgesenkten Zustand nach außen hin zusammengeklappt werden. Dies wäre für die erfindungsgemäße Aufgabe nachteilig, da der Platzbedarf auf der Schreibtischoberfläche dann unnötig groß wäre. Eine ähnliche Lösung enthalten die bekannten zusammenklappbaren Einkaufskisten aus Kunststoff. Bei diesen werden die Bodenplatte und der obere Rahmen durch Seitenwände zusammengehalten, die flach zusammengeklappt werden können. Hierbei werden aber Bodenplatte und oberer Rahmen nicht parallel geführt.

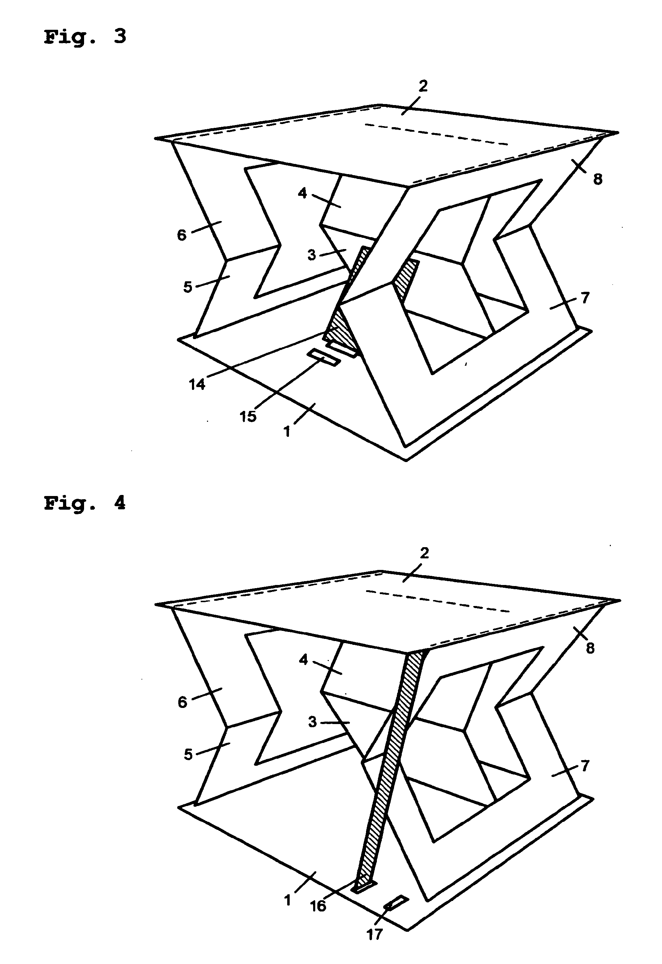

Das japanische Patent JP 10099171 zeigt eine Tragefläche, die mit ihrer Grundfläche über zwei zusammenklappbare Stützen verbunden ist, die im Winkel von 90 Grad zueinander an Grund- und Trageplatte mit Scharnieren befestigt sind und dadurch eine Parallelführung der Tragefläche bewirken. Bei dieser Konstruktion entspricht die Höhe jeder Stützenhälfte dem halben Abstand zwischen Grund- und Trageplatte in vollständig angehobener Position. Mindestens eine der Stützen (z.B. die linke hintere in Fig. 3 des japanischen Patents) kann also nur so schmal sein wie die Differenz zwischen der Tiefe der Trageplatte und ihrem halben Abstand zur Grundfläche in angehobener Position. Bei Abmessungen der Trageplatte von z.B. 30 cm mal 45 cm und einer angehobenen Maximalhöhe der Trageplatte von 40 cm könnte diese Stütze maximal 10 cm breit sein und mit dieser Scharnierlänge die Trageplatte unterstützen und gegen eine Schräglage festhalten. Dadurch würde die Stütze besonders während der Höhenverstellung sehr stark auf Torsion und die Grund- und Trageplatten auf Biegung beansprucht. Dies erfordert große Materialstärken und dadurch hohes Gewicht und läuft dem Ziel einer niedrigen Höhe in abgesenkter Position zuwider. Bei diesem Patent ist außerdem keine schnelle Einrastmöglichkeit für unterschiedliche Höhen angegeben.

Der Erfindung liegt die Aufgabe zugrunde, eine Lösung anzugeben, die die Nachteile der erwähnten Produkte vermeidet, die transportabel ist und in abgesenkter Position eines Geräteständers optisch und platzmäßig wenig stört, die ein Benutzer in dieser Position in der gewohnten Armhaltung bedienen kann und die es gleichzeitig ermöglicht, während und nach der Höhenverstellung die Geräte, die sich auf der tragenden Fläche des Geräteständers befinden, jederzeit in einem annähernd waagrechten oder definiert schrägen Zustand zu halten, so dass sie nicht herunterrutschen.

Die Aufgabe wird dadurch gelöst, dass eine Tragefläche von mindestens zwei zusammenklappbaren Stützen geführt wird, die in jeder Höhe eine Parallelführung der Tragefläche zur Grundfläche bewirken, indem ihre Stützenkanten nichtparallel zueinander an der Tragefläche und der Grundfläche gelenkig befestigt sind und mindestens eine Stütze Ausschnitte so enthält, dass dort hinein in mindestens einer Höhe mindestens eine anderes Stützenteil hineinragt, wobei die Tragefläche in mindestens einer Höhe gegen ein Absenken verriegelbar ist. Ausführungsformen der Erfindung sind in den Unteransprüchen angegeben.

Ausführungsbeispiele der Erfindung werden anhand folgender Figuren erläutert:
Fig. 1: Grundprinzip
Fig. 2: Durchgehende Stütze
Fig. 3: Hilfsstütze an einer Stütze
Fig. 4: Hilfsstütze an der Tragefläche
Fig. 5: Hilfsstützen mit Griff
Fig. 6: Mehrteilige Stützen

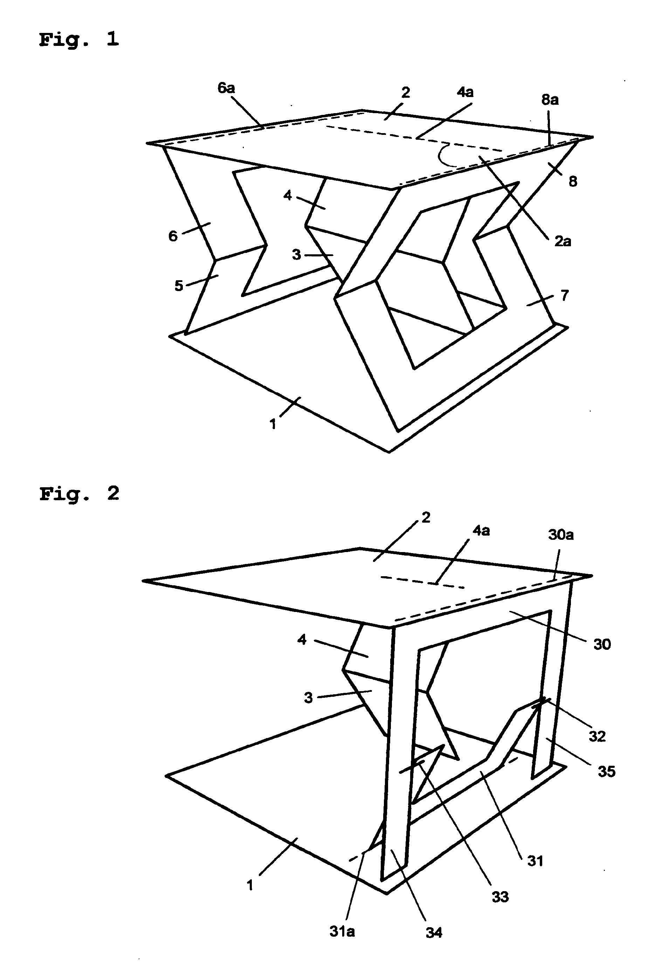

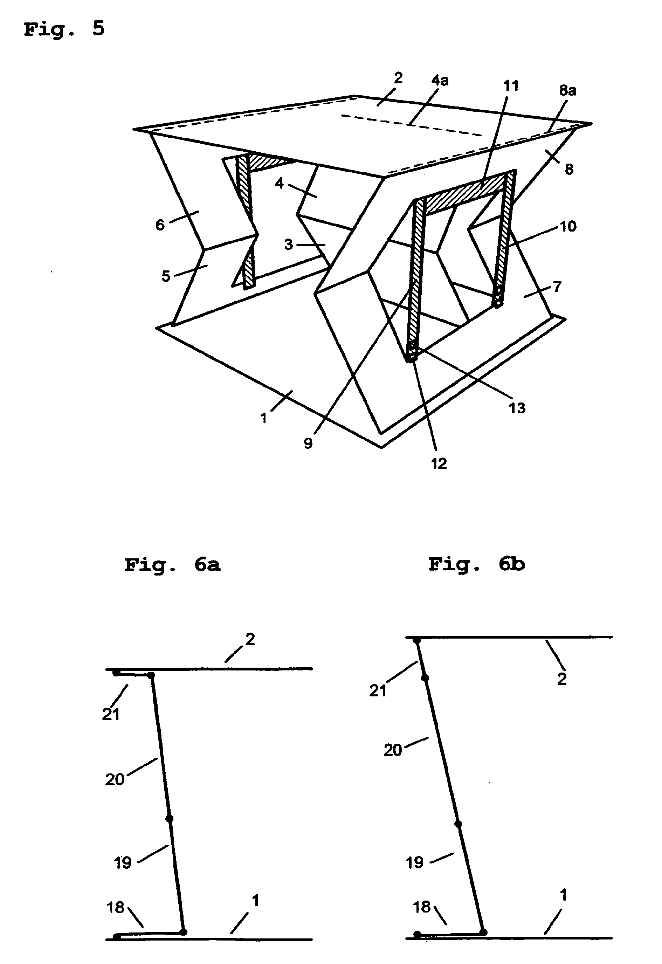

Eine Grundfläche 1 und eine Tragefläche 2 sind über mindestens zwei Stützen, in Fig. 1 zum Beispiel drei Stützen miteinander verbunden. Die Stützen bestehen in Fig. 1 bis 5 jeweils aus zwei Stützenteilen 3 und 4, 5 und 6 bzw. 7 und 8, im folgenden Stützenhälften genannt, während sie in Fig. 6 zum Beispiel aus vier Stützenteilen (18 bis 21) bestehen. Die untere Stützenhälfte jeder Stütze ist gelenkig z.B. durch Scharniere mit der oberen Stützenhälfte ihrer Stütze verbunden. Die unteren Stützenhälften 3, 5 bzw. 7 jeder Stütze sind mit der Grundfläche 1 gelenkig verbunden. Die oberen Stützenhälften 4, 6 bzw. 8 jeder Stütze sind an den Stützenkanten 4a, 6a bzw. 8a mit der Tragefläche 2 ebenfalls gelenkig verbunden.

Die Parallelität von Grund- und Tragefläche wird in der erfindungsgemäßen Lösung dadurch erreicht, dass die in Fig. 1 gestrichelt gezeichnete Stützenkante 4a der Stütze 3/4 zu mindestens einer gestrichelt gezeichneten Stützenkante 6a oder 8a der anderen Stützen 5/6 oder 7/8 in der Ebene der Tragefläche 2 nicht parallel, sondern in einem Winkel 2a zueinander angeordnet ist. Bei idealer Steifigkeit des Stützen- und Flächenmaterials und Spielfreiheit aller gelenkigen Verbindungen würde dann in jeder Höhe der Tragefläche 2 die Parallelität zu der Grundfläche 1 erzwungen. Bei realem Material liegt der Winkel 2a zwischen zweien der Stützenkanten vorteilhafterweise z.B. bei 90 Grad wie in Fig. 1, wenn Grund- und Tragefläche rechteckig sind.

Zum Anheben und Absenken kann der Geräteständer z.B. an der Tragefläche 2 angefasst werden. Wird die Tragefläche 2 aus der in Fig. 1 gezeigten Position weiter abgesenkt, so legen sich die Stützenhälften 4, 6 und 8 flach auf die korrespondierenden Stützenhälften 3, 5 und 7. In maximal abgesenkter Position befindet sich die Oberfläche der Tragefläche 2 mit z.B. einer darauf befindlichen Tastatur nur noch um die Summe der vier Materialstärken der Flächen 1, 2, 3 und 4 über der Tischoberfläche, auf der der Geräteständer steht. Dies brauchen bei geeignetem Material nur wenige Millimeter zu sein.

In einer weiteren Ausführungsform kann die Gesamthöhe des Geräteständers in abgesenkter Position dadurch noch weiter reduziert werden, dass die Stützenhälften 3 bis 8 in Aussparungen der Grundfläche 1 und/oder der Tragefläche 2 verschwinden, so dass die Oberfläche der Tragefläche 2 sich dann nur noch um die Summe der beiden Materialstärken von Grundfläche 1 und Tragefläche 2 über der Tischoberfläche befindet.

In einer weiteren Ausführungsform sind nicht nur zwei, sondern drei oder mehr Stützen vorhanden, um bei nicht idealem Material aller Teile eine höhere Stabilität zu erreichen.

In allen Ausführungsformen werden die mittleren Scharniere aller Stützen beim Absenken des Ständers in die Richtung zum Mittelpunkt der Grundfläche 1 und der Tragfläche 2 hin bewegt. Dazu werden in den Stützen Ausschnitte so angebracht oder die Stützen so geformt, dass sie sich beim Anheben und Absenken nicht gegenseitig behindern. Außerdem kann dann wie in Fig. 1 gezeigt die Anordnung und Formgebung der Stützen so gewählt werden, dass die Stützen in keiner Höheneinstellung über Grund- und Tragefläche des Geräteständers hinausragen und so der Platzbedarf auf dem Tisch minimal ist.

In einer weiteren Ausführungsform verschwindet, wie in Fig. 2 beispielhaft an einer Stütze 30/31 gezeigt, eine Stützenhälfte 31 beim Absenken der Tragefläche 2 in Aussparungen ihrer korrespondierenden Stützenhälfte 30. Dadurch kann die Gesamthöhe aller Stützen auf eine Materialstärke reduziert werden.

In einer weiteren Ausführungsform sind die Stützenhälften so geformt, dass jeweils ihre Unter- und Oberkanten nicht parallel zueinander sind. Dadurch kann beim Anheben des Geräteständers eine zunehmende Schräglage der Tragefläche 2 z.B. zum Benutzer hin erreicht werden, während die dazu rechtwinklige Richtung der Tragefläche 2 durch eine rechteckige Form der Stützenhälften 3 und 4 gleichzeitig waagrecht bleibt. Diese Ausführung kann beispielsweise für ein tragbares Rednerpult verwendet werden.

In einer weiteren Ausführungsform sind mindestens zwei Stützen, z.B. 5/6 und 7/8, verschieden hoch, so dass beim Anheben ebenfalls eine Schräglage erzwungen wird, wenn z.B. in diesem Fall die Stützenhälften 3 und 4 jeweils parallelogrammförmig sind.

Die beiden vorher beschriebenen Ausführungsformen können so kombiniert werden, dass beim Anheben der Tragefläche zwei verschiedene Schräglagen in zwei verschiedenen Ebenen erzwungen werden.

Die Verriegelung der Konstruktion bei maximaler Höhe und/oder bei möglichen Zwischenhöhen muss so gestaltet sein, dass sich die Tragefläche 2 dann in einem definierten stabilen Zustand befindet. Dabei sollen sich die Bestandteile der Verriegelungsmechanik im abgesenkten Zustand vorteilhafterweise aus optischen Gründen zwischen Grundfläche 1 und Tragefläche 2 befinden. Sie sollen außerdem die Höhe des Geräteständers im abgesenkten Zustand möglichst wenig vergrößern.

In einer weiteren Ausführungsform (Fig. 2) ist eine Stützenhälfte so geformt, dass sie an der oberen Stützenkante 30a mit der Tragefläche 2 gelenkig verbunden ist und zwei Stützenarme 34, 35 enthält, die sich im angehobenen Zustand auf die Grundfläche 1 aufstützen. Die Endstellung im angehobenen Zustand ist in Fig. 2 beispielsweise durch die gelenkigen Verbindungen 32 und 33 mit der anderen Stützenhälfte 31 und durch die Stütze 3/4 eindeutig festgelegt. Zum Absenken wird die Tragefläche 2 etwas angehoben, bis die Stützenhälfte 30 mit der Stützenhälfte 31 fluchtet, und dann die Stützenhälfte 30 manuell oder z.B. durch Federn weiter eingeklappt, bis sie im abgesenkten Zustand parallel zu Grund- und Tragefläche liegt.

In einer weiteren Ausführungsform wird eine Verriegelung dadurch erreicht, dass Hilfsstützen verwendet werden, die ebenso wie die Stützen beim Zusammenklappen zwischen Grund- und Tragefläche verschwinden. In Fig. 3 stützt z.B. eine Hilfsstütze 14, die von einer oder mehreren Rasten 15 in der Grundfläche 1 am Rutschen gehindert wird, die Stützenhälfte 3. Bei idealem Material kann damit die gesamte Konstruktion in einer oder mehreren Höhen fixiert werden.

In Fig. 4 ist in einer anderen Ausführungsform beispielhaft eine von vier Hilfsstützen 16 gezeigt, die die Ecken der Tragefläche 2 unterstützen und in eine oder mehrere Rasten 17 der Grundfläche 1 einrasten können. Diese Anordnung ist auch bei relativ elastischem Material der Stützen stabil.

In weiteren Ausführungsformen können anstelle von Hilfsstützen auch auf Zug beanspruchte Konstruktionselemente wie Zugstreben, Seile oder Ketten zur Verriegelung verwendet werden. Beispielsweise kann die Stellung der Stütze 30 in Fig. 2 auch ohne Stützenarme 34 und 35 dadurch erreicht werden, dass ein gespanntes Seil zwischen der gelenkigen Verbindung 33 und der entsprechenden gelenkigen Verbindung einer symmetrisch gegenüberliegenden in Fig. 2 nicht gezeigten Stütze eine Auseinanderbewegung dieser beiden Stützen verhindert und damit die Trageplatte 2 arretiert.

In Fig. 5 ist eine weitere Ausführungsform gezeigt, bei der beispielhaft die Hilfsstütze 9 an der oberen Stützenhälfte 8 gelenkig befestigt ist und sich durch eine Raste 12 auf die untere Stützenhälfte 7 abstützt. Gleiches gilt sinngemäß für die anderen drei nicht gezeigten Hilfsstützen. Dadurch, dass das untere Ende der Hilfsstütze 9 in einer oberen Stellung des Geräteständers noch einen Abstand bis zur Grundfläche 1 aufweist, kann die Hilfsstütze 9 durch weitere Rasten 13 auch in niedrigeren Positionen des Geräteständers arretiert werden. Außerdem können die Abmessungen der Stützen und Hilfsstützen so gewählt werden, dass die Hilfsstützen in jeder verriegelten Höhe senkrecht stehen.

In einer weiteren Ausführungsform sind die Hilfsstützen 9 und 10 durch eine Grifffläche 11 oben miteinander verbunden, gleiches gilt sinngemäß auf der anderen Seite des Geräteständers in Fig. 4. Dadurch kann der Benutzer die beiden Hilfsstützenpaare beim manuellen Anheben der Tragefläche 2 jeweils mit der linken und rechten Hand nach innen drücken, so die Verriegelung lösen und die Tragefläche 2 wieder absenken.

Bei realem Material wird die stabilste Position eines Geräteständers ohne Hilfsstützen dann erreicht, wenn die beiden Stützenhälften jeder Stütze miteinander fluchten, da die Stützen dann nur noch Druckkräfte in ihrer Längsrichtung und keine Biegekräfte aufnehmen müssen. Dieser Fall ist aber nur in der maximalen Arbeitshöhe des Geräteständers gegeben. Um mit dem Geräteständer dennoch verschiedene Arbeitshöhen in der stabilsten Position erreichen zu können, bestehen die Stützen in einer weiteren Ausführungsform nicht nur aus zwei, sondern aus mehreren Teilen. In den Fig. 6a und 6b sind die Seitenansichten einer Stütze gezeigt, die beispielhaft aus vier Stützenteilen 18 bis 21 besteht, die gelenkig miteinander verbunden sind. Dabei besteht die Gesamtstütze aus der unteren Stützenhälfte mit den Stützenteilen 18 und 19 sowie der insgesamt gleich hohen oberen Stützenhälfte mit den Stützenteilen 20 und 21.

Der PC-Ständer kann dadurch in diesem Bespiel auf vier verschiedene Arbeitshöhen z.B. für verschieden große Benutzer eingestellt werden. Die kleinste Arbeitshöhe wird dadurch eingestellt, dass das Stützenteil 18 parallel zur Grundfläche 1 und das Stützenteil 21 parallel zur Tragefläche 2 dauerhaft, aber für einen anderen Benutzer wieder lösbar fixiert wird. Die gelenkige Verbindung zwischen den Stützenteilen 19 und 20 wird dann zur Höhenverstellung in Fig. 6a nach rechts und links bewegt, während die Stützenteile 18 und 21 fixiert bleiben. In der maximalen Arbeitshöhe können die beiden Stützenteile 19 und 20 dann mit einer geeigneten Verriegelung zu einer durchgehenden Stütze verbunden werden, die leicht schräg steht, aber eine große Drucklast aufnehmen kann und eine maximale Stabilität der Position der Tragefläche 2 bewirkt.

Eine etwas größere maximale Arbeitshöhe wird in Fig. 6b dadurch erreicht, dass die Stützenteile 20 und 21 dauerhaft zu einer durchgehenden Stützenhälfte verbunden werden. Eine noch größere Arbeitshöhe wird erreicht, wenn stattdessen die Stützenteile 18 und 19 dauerhaft zu einer Stützenhälfte verbunden werden, da Stützenteil 18 größer ist als Stützenteil 21. Die höchste der vier möglichen Arbeitshöhen wird erreicht, wenn beide Maßnahmen gemeinsam durchgeführt werden.

In einer weiteren Ausführungsform wird die Tragefläche 2 durch Zusatzflächen, die gelenkig mit den Stützen, aber starr mit der Tragefläche 2 verbunden sind, in eine dauerhafte Schräglage gebracht. Wenn die Tragefläche 2 gegenüber der Grundfläche 1 übersteht, senkt sich dann ihre Vorderkante noch etwas weiter ab und verbessert die Armhaltung des Benutzers. Außerdem kann dann unter dem hinteren höher stehenden Teil der Tragefläche 2 leichter ein Motorantrieb für eine Höhenverstellung untergebracht werden.

In einer weiteren Ausführungsform ist der Geräteständer in eine Tischplatte eingebaut. Dies kann wegen der geringen Höhe des Geräteständers so erfolgen, dass die Tischplatte von oben eine Aussparung für den Geräteständer erhält, so dass die Unterseite der Tischplatte unbeschädigt bleibt, wobei der Boden der Aussparung auch die Grundfläche 1 bilden kann. Die Tragefläche 2 kann dann im abgesenkten Zustand eine gemeinsame Ebene mit der Tischplattenoberfläche bilden und bei Bedarf angehoben werden.

Wegen seiner geringen Höhe kann der Geräteständer auch in das Gerät, dessen Arbeitshöhe verändert werden soll, wie beispielsweise ein Notebook, eingebaut werden, wobei dann die Grundfläche 1 einen Teil des Bodens dieses Gerätes bilden kann.

### Bezugszeichenliste

- 1: Grundfläche
- 2: Tragefläche
- 2a: Winkel
- 3 bis 8: Stützenhälfte
- 4a, 6a, 8a: Stützenkante
- 9, 10: Hilfsstütze
- 11: Grifffläche
- 12, 13: Raste
- 14: Hilfsstütze
- 15: Raste
- 16: Hilfsstütze
- 17: Raste
- 18 bis 21: Stützenteil
- 30: Stützenhälfte
- 30a: Stützenkante
- 31: Stützenhälfte
- 32, 33: gelenkige Verbindung
- 34, 35: Stützenarm

## Patentansprüche

1. Höhenverstellbarer Geräteständer, insbesondere für einen Laptop oder für einen Monitor mit Tastatur, mit einer Grundfläche (1) und einer Tragefläche (2), die angehoben oder flach abgesenkt werden kann und die von mindestens zwei zusammenklappbaren Stützen (3/4, 7/8) geführt wird, die in jeder Höhe eine definierte Lage der Tragefläche (2) in Bezug auf die Grundfläche (1) bewirken, indem ihre Stützenkanten (4a, 8a) nichtparallel zueinander an der Tragefläche (2) und der Grundfläche (1) gelenkig befestigt sind, und dessen Tragefläche (2) in mindestens einer Höhe gegen ein Absenken verriegelbar ist, **dadurch gekennzeichnet, dass** die Stützen beim Absenken der Tragefläche (2) in Richtung zum Mittelpunkt von Grundfläche (1) und Tragefläche (2) hin geführt werden, wobei die Stützenteile mindestens einer Stütze Ausschnitte so enthalten, dass sich die Stützen beim Anheben und Absenken der Tragefläche (2) nicht gegenseitig behindern und in keiner Höhe der Tragefläche (2) über den Grundriss von Grundfläche (1) und Tragefläche (2) hinausragen.

2. Höhenverstellbarer Geräteständer nach Anspruch 1, **dadurch gekennzeichnet, dass** die Gesamthöhe des Geräteständers im abgesenkten Zustand dadurch reduziert wird, dass die Stützen (3 bis 8) dann in Aussparungen einer oder beider Flächen (1, 2) verschwinden.

3. Höhenverstellbarer Geräteständer nach einem der vorhergehenden Ansprüche, **dadurch gekennzeichnet, dass** jeweils ein Stützenteil beim Absenken in Aussparungen seines zugehörigen anderen Stützenteils verschwindet, so dass im abgesenkten Zustand alle Stützenteile eine gemeinsame Ebene bilden.

4. Höhenverstellbarer Geräteständer nach einem der vorhergehenden Ansprüche, **dadurch gekennzeichnet, dass** Unter- und Oberkante der Stützenteile mindestens einer der Stützen nichtparallel zueinander sind, so dass beim Anheben der Tragefläche (2) eine zunehmende Schräglage der Tragefläche (2) in einer Ebene erzwungen wird.

5. Höhenverstellbarer Geräteständer nach einem der vorhergehenden Ansprüche, **dadurch gekennzeichnet, dass** mindestens eine Stützenhälfte (30) mindestens einen verlängerten Stützenarm (34) besitzt, der im angehobenen Zustand von der Tragefläche (2) bis zur Grundfläche (1) reicht und dadurch die Tragefläche (2) abstützt.

6. Höhenverstellbarer Geräteständer nach einem der Ansprüche 1 bis 4, **dadurch gekennzeichnet, dass** die Verriegelung der Tragefläche (2) gegen unbeabsichtigtes Absenken durch mindestens eine Hilfsstütze (14) erfolgt, die mit einem Ende an einem Stützenteil (3) gelenkig befestigt ist und sich zum Verriegeln mit ihrem anderen Ende in mindestens einer Höhe der Tragefläche (2) auf Rasten (15) der Grundfläche (1) oder der Tragefläche (2) abstützt oder sich dort einhakt.

7. Höhenverstellbarer Geräteständer nach einem der Ansprüche 1 bis 4, **dadurch gekennzeichnet, dass** die Verriegelung der Tragefläche (2) gegen unbeabsichtigtes Absenken durch mindestens eine Hilfsstütze (16) erfolgt, die mit einem Ende an der Tragefläche (2) oder der Grundfläche (1) gelenkig befestigt ist und sich zum Verriegeln in mindestens einer Höhe der Tragefläche (2) mit ihrem anderen Ende auf Rasten (17) der Grundfläche (1) beziehungsweise der Tragefläche (2) abstützt oder sich dort einhakt.

8. Höhenverstellbarer Geräteständer nach einem der Ansprüche 1 bis 4, **dadurch gekennzeichnet, dass** die Verriegelung der Tragefläche (2) gegen unbeabsichtigtes Absenken durch mindestens eine Hilfsstütze (9) erfolgt, die mit einem Ende an einer waagrechten Kante des Ausschnitts eines Stützenteils (8) gelenkig befestigt ist und sich zum Verriegeln mit Rasten (12, 13) an ihrem anderen Ende in mindestens einer Höhe der Tragefläche (2) an der Kante des Ausschnitts des zugehörigen anderen Stützenteils (7) abstützt oder sich dort einhakt, wobei die Ausschnitte so dimensioniert sind, dass die Hilfsstütze (9) in jeder verriegelten Höhe der Tragefläche (2) senkrecht steht und im abgesenkten Zustand in den Ausschnitten der Stützenteile (7/8) verschwindet.

9. Höhenverstellbarer Geräteständer nach einem der Ansprüche 1 bis 4, **dadurch gekennzeichnet, dass** die Verriegelung der Tragefläche (2) gegen unbeabsichtigtes Absenken durch mindestens eine Seil- oder Kettenverbindung zwischen einem Stützenteil (3 bis 8) und der Grundfläche (1), der Tragefläche (2) oder einem anderen Stützenteil (3 bis 8) erfolgt, die in gespanntem Zustand in mindestens einer Höhe der Tragefläche (2) ein Zusammenklappen der Stützenteile (3 bis 8) verhindert.

10. Höhenverstellbarer Geräteständer nach einem der Ansprüche 6 bis 8, **dadurch gekennzeichnet, dass** mindestens zwei Hilfsstützen (9, 10) paarweise durch eine Grifffläche (11) so miteinander verbunden sind, dass sie mit derselben Hand bewegt werden können, mit der auch die Tragefläche (2) zum Absenken angefasst wird.

11. Höhenverstellbarer Geräteständer nach einem der Ansprüche 1 bis 4, **dadurch gekennzeichnet, dass** eine Verriegelung bei derjenigen Höhe der Tragefläche (2) erfolgt, bei der die Stützenteile mindestens einer der Stützen miteinander fluchten.

12. Höhenverstellbarer Geräteständer nach Anspruch 11, **dadurch gekennzeichnet, dass** mindestens eine Stütze aus zwei gleich hohen Stützenhälften besteht, von denen mindestens eine aus zwei oder mehr gelenkig miteinander verbundenen Stützenteilen besteht, wobei zwei oder mehr Stützenteile (20 und 21) einer Stützenhälfte dann miteinander verriegelt werden können, wenn sie miteinander fluchten, und ein Stützenteil (18) oder mehrere Stützenteile derselben oder einer anderen Stützenhälfte mit der Grundfläche (1) oder der Tragefläche (2) verriegelt werden können, so dass sich verschiedene maximale Arbeitshöhen der Tragefläche (2) einstellen lassen.

13. Höhenverstellbarer Geräteständer nach einem der vorhergehenden Ansprüche, **dadurch gekennzeichnet, dass** die Tragefläche (2) durch Zusatzflächen zwischen Stützenteilen und der Tragefläche (2) bei allen Höhen eine konstante Schrägstellung erhält.

14. Höhenverstellbarer Geräteständer nach einem der vorhergehenden Ansprüche, **dadurch gekennzeichnet, dass** die Höhenverstellung durch einen Motorantrieb erfolgt.

15. Höhenverstellbarer Geräteständer nach einem der vorhergehenden Ansprüche, **dadurch gekennzeichnet, dass** der Geräteständer in eine Tischplatte oder ein in der Arbeitshöhe zu verstellendes Gerät eingebaut ist.

## Claims

1. Height-adjustable equipment stand, for a notebook or for a monitor with keyboard in particular, with a base surface (1), and a support surface (2), which can be raised or lowered to a flat position and which is guided by at least two folding brackets (3/4, 7/8), the edges (4a, 8a) of which are fastened non-parallel to each other to the support surface (2) and the base surface in an articulating manner, and thus at each height cause a defined position of the support surface (2) relative to the base surface (1), wherein the support surface (2) can be locked in at least one height to prevent accidental lowering, **characterized in that** the supports are guided towards the centre of the base surface (1) and the support surface (2) when the support surface (2) is lowered, wherein the bracket parts of at least one bracket comprise cut-outs in such a way that the brackets do not interfere with each other during lifting and lowering processes of the support surface (2) and do not project beyond the outline of the base surface (1) and support surface (2) at any height of the support surface (2).

2. Height-adjustable equipment stand according to claim 1, **characterized in that** the total height of the equipment stand in the lowered position is reduced, as the brackets (3-8) disappear in recesses of one or both surfaces (1, 2).

3. Height-adjustable equipment stand according to any of the above claims, **characterized in that** in each case one bracket part, when lowered, disappears in recesses of the corresponding other bracket part, so that in the lowered position all bracket parts form a common plane.

4. Height-adjustable equipment stand according to any of the above claims, **characterized in that** the lower
and upper edges of the bracket parts of at least one of the brackets are not parallel to each other, so that when the support surface (2) is lifted, an increasing inclination of the surface (2) in one plane is forced.

5. Height-adjustable equipment stand according to any of the above claims, **characterized in that** at least one bracket half (30) is equipped with at least one long bracket arm (34) which, in the lifted position, extends from the support surface (2) to the base surface (1) and thereby supports the support surface (2).

6. Height-adjustable equipment stand according to one of the claims 1 to 4, **characterized in that** locking of the support surface (2) to prevent accidental lowering is done by means of at least one auxiliary bracket (14), one end of which is articulated at a bracket part (3), and the other end of which is supported on or hooked in notches (15) of the base surface (1) or the support surface (2), for locking in at least one height of the support surface (2).

7. Height-adjustable equipment stand according to one of the claims 1 to 4, **characterized in that** locking the support surface (2) to prevent accidental lowering is done by means of at least one auxiliary bracket (16), one end of which is articulated at the support surface (2) or the base surface(1) and the other end of which is supported on or hooked in notches (15) of the base surface (1) or the support surface (2), for locking in at least one height of the support surface (2).

8. Height-adjustable equipment stand according to one of the claims 1 to 4, **characterized in that** locking the support surface (2) to prevent accidental lowering is done by means of at least one auxiliary bracket (9), one end of which is articulated at a horizontal edge of the cut-out of a bracket part (8), and the other end of which has notches (12, 13), which, in order to lock, are supported on or hooked at the edge of the cut-out of the corresponding other bracket part (7) in at least one height of the support surface (2), wherein the dimensions of the cut-outs are such, that the auxiliary bracket (9) is vertical at each locked height of the support surface (2) and that in the lowered position it disappears in the cut-outs of the bracket parts (7/8).

9. Height-adjustable equipment stand according to one of the claims 1 to 4, **characterized in that** locking the support surface (2) to prevent accidental lowering is done by means of at least one cable or chain connection between a bracket part (3-8) and the base surface (1), the support surface (2) or another bracket part (3-8), which, in its tensioned state prevents folding of the bracket parts (3-8) in at least one height of the support surface (2).

10. Height-adjustable equipment stand according to one of the claims 6 to 8, **characterized in that** at least two auxiliary brackets (9, 10) are connected in pairs by a handle surface (11) in such a way that they can be moved with one hand, which also handles the support surface (2) for lowering.

11. Height-adjustable equipment stand according to one of the claims 1 to 4, **characterized in that** it locks place at that height of the support surface (2), in which the bracket parts of at least one of the brackets are aligned.

12. Height-adjustable equipment stand according to claim 11, **characterized in that** at least one bracket consists of two equal bracket halves, at least one of which is made up of two or more articulated bracket parts, wherein two or more bracket parts (20 and 21) of a bracket half are locked when they are aligned, and wherein one bracket part (18) or several bracket parts of this bracket half or of a different bracket half can be locked with the base surface (1) or the support surface (2), so that the maximum operating height of the support surface (2) can be adjusted to different levels.

13. Height-adjustable equipment stand according to any of the above claims, **characterized in that**, by means of additional surfaces between bracket parts and the support surface (2), the support surface (2) is inclined at a constant angle at all heights.

14. Height-adjustable equipment stand according to any of the above claims, **characterized in that** its height is adjusted by a motor drive.

15. Height-adjustable equipment stand according to any of the above claims, **characterized in that** the equipment stand is incorporated in a tabletop or in a device with an adjustable working height.

## Revendications

1. Montant pour équipement réglable en hauteur, pour un ordinateur portable ou un moniteur avec clavier en particulier, avec une surface de base (1), et une surface d'appui (2), qui peut être élevée ou abaissée à une position à plat et qui est guidée par au moins deux supports pliables (3 / 4, 7 / 8), dont les bords (4a, 8a) sont attachés, non parallèles les uns aux autres, à la surface d'appui (2) et à la surface de base de manière articulée, et donc à chaque hauteur causent une position définie, par rapport à la surface de base (1), de la surface d'appui (2), ladite surface d'appui (2) pouvant être verrouillée dans au moins une hauteur contre un abaissement, **caractérisé en ce que**, lorsque la surface d'appui (2) est abaissée, les supports sont guidés vers le centre de la surface de base (1) et la surface d'appui (2), les parties d'au moins un support comportant des découpes de manière que les parties des supports n'interférent pas les uns avec les autres pendant le levage et l'abaissement de la surface d'appui (2), et ne dépassent le contour de la surface de base (1) et de la surface d'appui (2) dans aucune hauteur de la surface de support (2).

2. Montant pour équipement réglable en hauteur selon la revendication 1, **caractérisé en ce que** la hauteur totale du montant pour équipement est réduite dans la position abaissé, du fait que les supports (3 - 8) disparaissent dans des évidements de l'une ou des deux surfaces (1, 2).

3. Montant pour équipement réglable en hauteur selon l'une des revendications précédentes, **caractérisé en ce que** pendant l'abaissement respectivement une partie de support disparaît dans des évidements d'une partie de support correspondante, de sorte que dans la position abaissée toutes les parties des supports forment un plan commun.

4. Montant pour équipement réglable en hauteur selon l'une des revendications précédentes, **caractérisé en ce que** les bords inférieurs et supérieurs des parties d'au moins un des supports ne sont pas parallèles les uns aux autres, de sorte que lorsque la surface d'appui (2) est levée, une inclination croissante dans un plan de la surface (2) est forcée.

5. Montant pour équipement réglable en hauteur selon l'une des revendications précédentes, **caractérisé en ce que** au moins une partie de support (30) est équipé d'au moins un bras de support prolongé (34) qui, dans la position élevée, s'étend de la surface d'appui (2) à la surface de base (1) et ainsi supporte la surface d'appui (2).

6. Montant pour équipement réglable en hauteur selon l'une des revendications 1 à 4, **caractérisé en ce que** le verrouillage de la surface de support (2) contre un abaissement accidentel se fait au moyen d'au moins un support auxiliaire (14), dont une extrémité est articulée à une partie de support (3), et dont l'autre extrémité est supportée sur ou accrochée à des encoches (15) de la surface de base (1) ou de la surface d'appui (2), pour le verrouillage dans au moins une hauteur de la surface d'appui (2).

7. Montant pour équipement réglable en hauteur selon l'une des revendications 1 à 4, **caractérisé en ce que** le verrouillage de la surface d'appui (2) contre un abaissement accidentel se fait au moyen d'au moins un support auxiliaire (16), dont une extrémité est articulée à la surface d'appui (2) ou à la surface de base (1) et dont l'autre extrémité est supportée sur ou accrochée à des encoches (17) de la surface de base (1) ou de la surface d'appui (2) respectivement, pour le verrouillage dans au moins une hauteur de la surface d'appui (2).

8. Montant pour équipement réglable en hauteur selon l'une des revendications 1 à 4, **caractérisé en ce que** le verrouillage de la surface d'appui (2) contre un abaissement accidentel se fait au moyen d'au moins un support auxiliaire (9), dont une extrémité est articulée à un bord horizontal de la découpe d'une partie de support (8), et dont l'autre extrémité a des encoches (12, 13) au moyen desquelles elle est supportée sur ou accrochée au bord de la découpe de la partie de support correspondante (7) pour le verrouillage dans au moins une hauteur de la surface d'appui (2), les dimensions des découpes étant telles, que le support auxiliaire (9) est vertical à chaque hauteur verrouillé de la surface d'appui (2) et que dans la position abaissée, il disparaît dans les découpes des parties de support (7 / 8).

9. Montant pour équipement réglable en hauteur selon l'une des revendications 1 à 4, **caractérisé en ce que** le verrouillage de la surface d'appui (2) contre un abaissement accidentel se fait au moyen d'au moins une connexion par câble ou chaîne entre une partie de support (3-8) et la surface de base (1), la surface d'appui (2) ou une autre partie de support (3-8), qui, dans son état tendu dans au moins une hauteur de la surface d'appui (2) empêche un pliage des parties des supports (3-8).

10. Montant pour équipement réglable en hauteur selon l'une des revendications 6 à 8, **caractérisé en ce qu'**au moins deux supports auxiliaires (9, 10) sont reliés en paires par une surface de poignée (11) de telle manière qu'ils peuvent être déplacés avec une seule main, qui saisit également la surface d'appui (2) pour l'abaisser.

11. Montant pour équipement réglable en hauteur selon l'une des revendications 1 à 4, **caractérisé en ce qu'**un verrouillage a lieu à cette hauteur de la surface d'appui (2), dans laquelle les parties d'au moins un des supports sont alignés.

12. Montant pour équipement réglable en hauteur selon la revendication 11, **caractérisé en ce qu'**au moins un support se compose de deux moitiés à hauteur égale, dont au moins une est constituée de deux ou plusieurs parties articulées, dans lequel deux ou plusieurs parties de support (20 et 21) d'une moitié de support peuvent être verrouillés lorsqu'ils sont alignés, et dans lequel une partie (18) ou plusieurs parties d'une moitié de support ou d'encore une autre moitié de support peuvent être verrouillées avec la surface de base (1) ou la surface d'appui (2), de sorte que la hauteur maximale de la surface d'appui (2) peut être ajustée à différents niveaux de travail.

13. Montant pour équipement réglable en hauteur selon l'une des revendications précédentes, **caractérisé en ce que**, au moyen de surfaces supplémentaires entre des parties de support et la surface d'appui (2), la surface d'appui (2) est inclinée à un angle constant à toutes les hauteurs.

14. Montant pour équipement réglable en hauteur selon l'une des revendications précédentes, **caractérisé en ce que** sa hauteur est ajustée par un moteur.

15. Montant pour équipement réglable en hauteur selon l'une des revendications précédentes, **caractérisé en ce que** le montant pour équipement est intégré dans une table ou dans un appareil avec un niveau de travail réglable.
